Europäisches Patentamt

(19) European Patent Office

Office européen des brevets

(11) Numéro de publication: **0 069 815**

**A1**

(12) **DEMANDE DE BREVET EUROPEEN**

(21) Numéro de dépôt: **81401106.0**

(22) Date de dépôt: **09.07.81**

(51) Int. Cl.³: **G 01 B 11/00**
**G 01 B 11/16, H 05 B 41/34**
**B 64 C 27/00**

(43) Date de publication de la demande:
**19.01.83 Bulletin 83/3**

(84) Etats contractants désignés:
**DE GB NL**

(71) Demandeur: **ETAT-FRANCAIS représenté par le DELEGUE GENERAL POUR L'ARMEMENT Bureau des Brevets et Inventions de la Délégation Générale pour l'Armement 14, rue Saint-Dominique F-75997 Paris Armées(FR)**

(72) Inventeur: **Sabatier, Michel Route de Figuagnières F-83920 La Motte(FR)**

(54) Dispositif et procédé pour mesurer et régler les écarts de sillage des pales d'hélicoptères.

(57) Le dispositif pour mesurer et régler les écarts de sillage des pales d'hélicoptère, comprend une lampe strosboscopique (7) destinée à être dirigée vers une cible réfléchissante (10, 13) placée à l'extrémité de chacune des pales et des moyens (3) pour commander l'émission d'un rayonnement lumineux (9) de la lampe strosboscopique (7) à chaque passage d'une cible réfléchissante (10, 13) d'une pale dans la ligne de visée de cette lampe (7), pour permettre une visualisation de la position des différentes cibles.

Le dispositif comprend des moyens (6) constitués par un boîtier de décalage des cibles permettant de décaler dans le temps d'une manière réglable l'émission des rayonnements lumineux (9) correspondant aux différentes pales pour éviter la superposition des cibles (10, 13) visualisées dans la ligne de visée de la lampe strosboscopique (7).

Utilisation: réglage en vol ou au sol du sillage des pales d'hélicoptère.

Fig. 2

EP 0 069 815 A1

La présente invention concerne un dispositif pour mesurer et régler les écarts de sillage des pales d'hélicoptère.

L'invention vise également un procédé de mesure et de réglage comprenant l'utilisation du dispositif précité.

Pour éviter toute vibration anormale des palles d'un hélicoptère, il est important que les extrémités de ces pales tournent toutes dans un même plan. Il est de ce fait nécessaire de régler avec précision le sillage de ces pales.

Un réglage grossier de ce sillage peut être effectué de la façon suivante: on trace sur les saumons c'est-à-dire les extrémités des pales, des marques de couleurs différentes obtenues au moyen de craies ou de crayons feutres. On fait tourner les pales et on approche un drapeau des extrémités de ces pales. Au contact de ce drapeau, avec les extrémités de ces pales, des traces des marques précitées se déposent sur ce drapeau, ce qui permet d'identifier les écarts éventuels de sillage. A partir de ces écarts, on règle le sillage en agissant sur les longueurs respectives des biellettes de changement de pas des pales.

Cette méthode présente les inconvénients d'être peu précise et de n'être possible qu'au sol par vent calme.

Un réglage plus précis du sillage des pales peut être obtenu par la méthode strosboscopique suivante: on utilise une lampe strosboscopique maintenue par un opérateur placé dans l'hélicoptère. Cette lampe strosboscopique est orientée dans une direction fixe telle que l'extrémité des pales coupe la ligne de visée de cette lampe, laquelle émet un rayonnement lumineux chaque fois qu'une extrémité de pale passe dans la ligne de visée de la lampe. L'émission de ce rayonnement lumineux est commandée par un capteur magnétique qui délivre des signaux électriques grâce à des couteaux magnétiques placés sur un disque monté en rotation sur le rotor des pales. Ces couteaux magnétiques présentent entre eux le même écart angulaire que les pales, de sorte que la position des couteaux magnétiques correspond à celle des pales.

De plus, les extrémités des pales présentent chacune une cible réfléchissante qui est illuminée chaque fois qu'elle traverse le rayonnement lumineux émis par la lampe strosboscopique, ce qui permet à l'opérateur de distinguer cette cible.

Pour pouvoir distinguer ces cibles entre elles, chaque pale comporte une cible de forme différente des autres cibles. Etant donné que les pales tournent à une vitesse supérieure à la vitesse de perception rétinienne de l'oeil de l'opérateur, ce dernier distingue ces cibles toutes en même temps et il peut ainsi apprécier leurs positions relatives qui traduit les écarts de sillage des pales les unes par rapport aux autres.

La méthode strosboscopique précitée présente l'énorme avantage sur la méthode du drapeau décrite précédemment, en ce qu'elle permet de contrôler le sillage lors du vol de l'hélicoptère.

Cependant, cette méthode présente des inconvénients. En effet, l'appréciation de la position relative des cibles réfléchissantes est délicate, car ces cibles apparaissent simultanément dans un champ de vision très restreint, de sorte qu'elles sont plus ou moins en superposition. De plus, la nécessité de donner aux cibles des formes distinctes ne permet pas d'obtenir une bonne précision de mesure, de sorte que les réglages obtenus à partir de ces mesures, ne sont pas toujours très rigou-

3

reux.

Par ailleurs, plus le nombre de pales de l'hélicoptère est important, plus il est difficile pour l'opérateur de différencier les cibles les unes des autres et d'apprécier leur position relative. Ainsi dans le cas d'un hélicoptère à six pales, le réglage du sillage des pales est une opération très délicate. Il en est de même dans le cas d'un hélicoptère comportant moins de six pales, lorsque par construction, cet hélicoptère exige des tolérances très faibles pour les écarts de sillage des pales.

Le but de la présente invention est de perfectionner la méthode strosboscopique précitée en créant un dispositif permettant de mesurer et de régler aisément et avec une excellente précision les écarts de sillage des pales d'hélicoptère.

Le dispositif visé par l'invention comprend une lampe strosboscopique destinée à être dirigée vers une cible réfléchissante placée aux extrémités des pales, et des moyens pour commander l'émission d'un rayonnement lumineux de la lampe strosboscopique à chaque passage d'une cible réfléchissante d'une pale dans la ligne de visée de cette lampe vers la cible pour permettre une visualisation de la position des différentes cibles.

Suivant l'invention, ce dispositif est caractérisé en ce qu'il comprend des moyens pour décaler dans le temps d'une manière réglable l'émission des rayonnements lumineux correspondant aux différentes pales, pour éviter la superposition des cibles visualisées dans la ligne de visée de la lampe strosboscopique.

Ainsi, au lieu d'apparaître superposées dans le champ de vision de l'opérateur, les cibles réfléchissantes apparaissent décalées les unes par rapport aux autres, selon des écarts réglables par l'opérateur. Ainsi,

4

l'opérateur peut distinguer aisément les différentes cibles et apprécier facilement leur position relative par rapport à une cible de la pale choisie comme référence.

A cet effet, il est préférable que la pale choisie comme référence présente une cible de forme différente de celle des cibles correspondant aux autres pales, ces dernières pouvant être identiques entre elles.

Ceci est possible grâce au fait que les cibles peuvent être décalées les unes par rapport aux autres selon des écarts réglables, ce qui évite tout risque de confusion par l'opérateur.

Selon une version avantageuse de l'invention, des moyens sont prévus pour décaler identiquement par rapport à l'émission du rayonnement lumineux issu de la lampe strosboscopique pour la pale de référence, l'émission des rayonnements lumineux correspondant aux autres pales.

Ainsi la cible de la pale de référence est parfaitement distincte des cibles appartenant aux autres pales.

Pour permettre de mieux apprécier la position relative de la cible appartenant à la pale de référence, par rapport aux autres cibles, il est préférable que les moyens de décalage comprennent des moyens pour supprimer successivement le décalage de l'émission du rayonnement lumineux correspondant aux différentes cibles par rapport à l'émission du rayonnement lumineux correspondant à la pale de référence, afin de pouvoir superposer successivement les différentes cibles avec la cible de la pale de référence.

De préférence, la cible réfléchissante de la pale choisie comme référence est une bande verticale,

5

les cibles des autres pales étant constituées par des bandes horizontales identiques entre elles.

Ces formes de cibles présentent l'avantage d'être simples et de permettrent d'effectuer des mesures précises de la position relative de la cible de référence par rapport à chacune des autres cibles.

Dans le cas où les moyens pour commander l'émission du rayonnement lumineux de la lampe strosboscopique, comprennent un capteur magnétique et des couteaux magnétiques entraînés en rotation par le rotor des pales, comme indiqué dans l'introduction de la présente description, l'invention prévoit selon une version préférée, d'intercaler entre le capteur magnétique précité et la lampe strosboscopique, un boîtier de décalage renfermant un circuit électronique comprenant des potentiomètres réglables, associés à chaque pale, ces potentiomètres permettant de régler le décalage entre les signaux issus du capteur magnétique et l'émission du rayonnement lumineux de la lampe strosboscopique.

L'opérateur peut ainsi décaler les cibles les unes par rapport aux autres et les ramener successivement en superposition avec la cible de référence, simplement en agissant sur les potentiomètres de réglage du boîtier de décalage.

L'invention vise également un procédé pour mesurer et régler les écarts de sillage des pales d'hélicoptère ,comprenant l'utilisation d'un dispositif conforme à l'invention.

Ce procédé comprend les étapes suivantes:

a) on décale dans le temps l'émission des rayonnements lumineux issus de la lampe stroboscopique correspondant aux différentes pales à l'exception de la pale de référence, en vue d'écarter la position des cibles réfléchissantes des premières pales par

6

rapport à celle de la pale de référence,

b) on annule le décalage précité pour l'une des pales pour amener la cible correspondante en superposition avec la cible de la pale de référence,

c) on mesure visuellement l'écart de sillage d'après les positions respectives des deux cibles,

d) on écarte à nouveau la cible de la pale précitée, par rapport à la cible de la pale de référence,

e) et on répète ensuite successivement les étapes b), c) et d) pour les cibles des autres pales.

D'autres particularités et avantages de l'invention apparaîtront encore dans la description ci-après.

Aux dessins annexés donnés à titre d'exemples non limitatifs:

- la figure 1 est une vue en perspective d'un hélicoptère en vol équipé d'un dispositif conforme à l'invention,

- la figure 2 est une vue schématique de l'ensemble du dispositif conforme à l'invention,

- la figure 3 est une vue en perspective de l'extrémité de la pale de référence d'un hélicoptère portant une cible réfléchissante illuminée par le rayonnement lumineux issu de la lampe strosboscopique,

- la figure 4 est une vue de la face avant de la cible réfléchissante portée par la pale de référence,

- la figure 5 est une vue de face de la cible réfléchissante portée par chacune des autres pales,

- la figure 6 est une vue schématique montrant la position relative des différentes cibles qui apparaissent dans le champ de vision de l'opérateur, quatre cibles étant écartées de la cible de référence et l'une des cibles étant amenée sensiblement en juxtaposition avec la cible de référence,

7

- la figure 7 est une vue schématique montrant les positions relatives successives de la cible de référence par rapport aux autres cibles après avoir supprimé le décalage entre cette cible de référence et ces autres cibles,

- la figure 8 est une vue schématique du circuit électronique contenu dans le boîtier de décalage des cibles du dispositif conforme à l'invention,

- la figure 9 est une vue des signaux électriques relevés en différents points du circuit électronique de la figure 8.

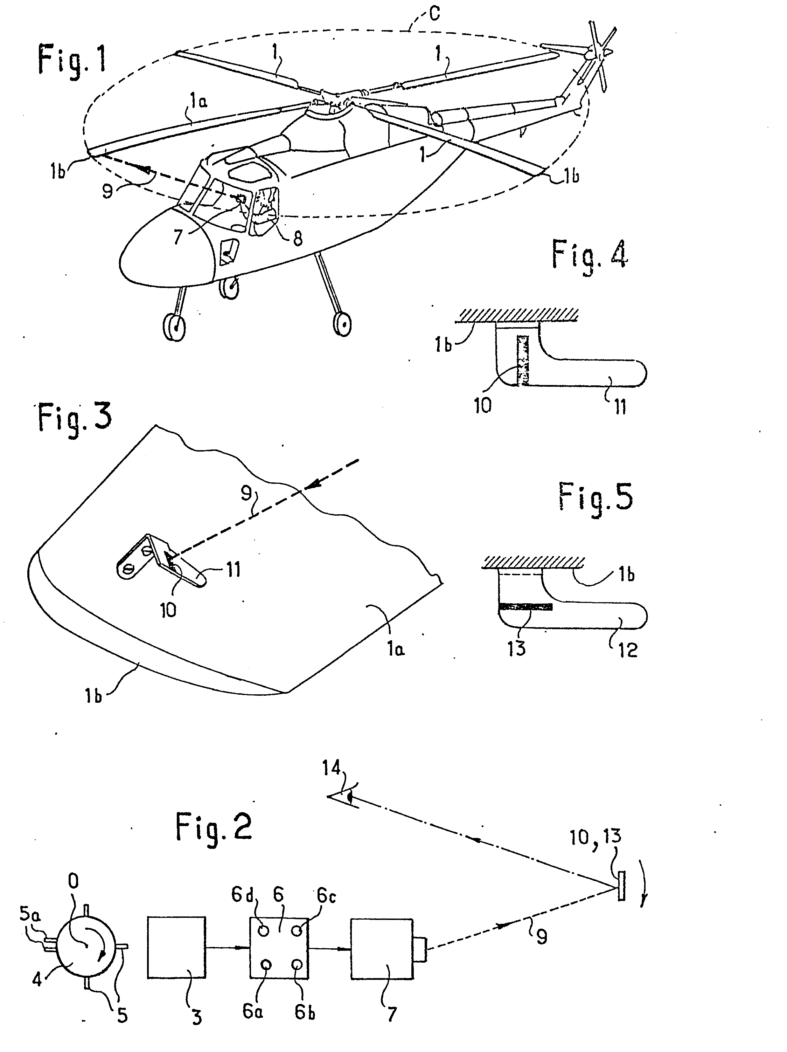

Sur la figure 1, on a représenté un hélicoptère comportant quatre pales 1, 1a. Lors de la rotation de ces pales 1, 1a, les extrémités 1b de ces dernières décrivent une trajectoire circulaire. Lorsque le sillage des pales est bien réglé, les extrémités 1b de ces pales décrivent un cercle unique C. Si tel n'est pas le cas, c'est-à-dire si les extrémités 1b des pales 1, 1a sont écartées du cercle C, on doit procéder au réglage du sillage des pales 1, 1a à l'aide du dispositif conforme à l'invention que l'on va décrire ci-après.

Ce dispositif comprend essentiellement (voir figure 2) un capteur magnétique 3 disposé à l'intérieur de l'hélicoptère et placé en regard d'un disque 4 monté en rotation suivant l'axe O du rotor portant les pales 1, 1a. Ce disque 4 porte des couteaux magnétiques radiaux 5, 5a, par exemple en acier, disposés à 90° les uns des autres. La position des couteaux magnétiques 5 correspond à celle des pales 1. Le couteau double 5a a une position qui correspond à celle de la pale 1a qu'on a choisie comme pale de référence.

Le capteur magnétique 3 est relié électriquement par l'intermédiaire d'un boîtier de décalage 6 à une lampe strosboscopique 7.

8

Dans l'exemple de la figure 1, cette lampe strosboscopique 7 est portée par l'opérateur 8 qui est placé à l'intérieur de l'hélicoptère. Cette lampe strosboscopique 7 est dirigée vers l'extrémité 1b de la pale 1a de façon à ce que le rayonnement lumineux 9 issu de cette lampe 7 illumine la bande réfléchissante 10 placée sur la cible 11 fixée à l'extrémité 1b de la pale 1a (voir figures 2, 3 et 4).

Les autres pales 1 portent également à leur extrémité 1b des cibles 12 comportant chacune une bande réfléchissante 13.

Le dispositif que l'on vient de décrire fonctionne de la façon suivante.

Chaque fois qu'un couteau magnétique 5, 5a passe devant le capteur magnétique 3, ce dernier émet un signal électrique qui commande l'émission d'un rayonnement lumineux 9 de la lampe strosboscopique 7. Au même instant, la bande réfléchissante 13 d'une cible 12 portée à l'extrémité 1b de la pale 1 correspondant à un couteau magnétique 5 intercepte la ligne de visée de la lampe strosboscopique 7, de sorte que cette bande réfléchissante 13 est illuminée par le rayonnement lumineux 9 issu de cette lampe. L'oeil 14 de l'opérateur 8 distingue alors la forme de cette bande réfléchissante 13.

Etant donné que le temps de passage entre deux pales est très court (40 à 60 millisecondes), ce qui est nettement inférieur au temps de perception rétinienne, l'opérateur 8 distingue toutes les bandes réfléchissantes 10, 13 en même temps, ces dernières se formant et se reformant successivement à une fréquence qui est fonction du temps de passage entre les différentes pales.

Dans le cas idéal, c'est-à-dire lorsque les extrémités 1b des pales 1a, 1 tournent dans un cercle commun C, les bandes réfléchissantes 10, 13 sont visualisées à l'opérateur 8 en parfaite superposition les unes sur les autres.

Lorsque le sillage des pales 1a, 1 n'est pas parfait, l'opérateur 8 voit les bandes réfléchissantes 10, 13 plus ou moins décalées les unes des autres dans une direction verticale.

Pour faciliter la visualisation de ces bandes réfléchissantes 10, 13, apprécier leur position relative les unes par rapport aux autres et par suite pour régler le sillage des pales 1, 1a, le dispositif conforme à l'invention comprend un boîtier de décalage 6 intercalé entre le capteur magnétique 3 et la lampe strosboscopique 7.

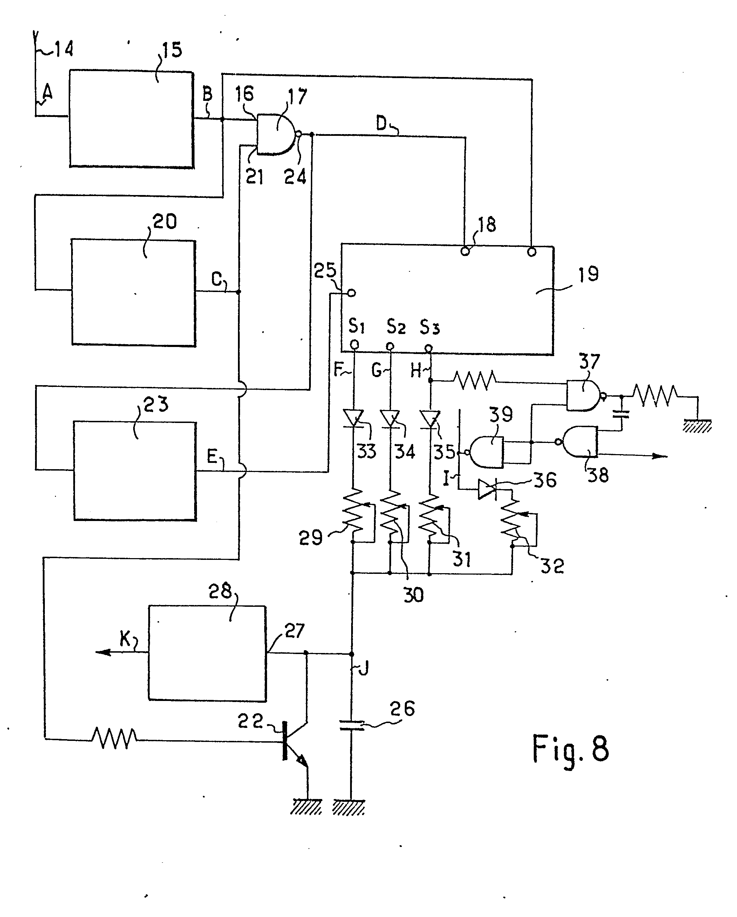

Ce boîtier de décalage 6 renferme un circuit électronique que l'on détaillera ci-après en référence à la figure 8 et qui comprend des potentiomètres réglables en agissant sur les boutons 6a, 6b, 6c et 6d associés aux différentes pales. Ces potentiomètres permettent de décaler dans le temps d'une manière réglable, l'émission du rayonnement lumineux de la lampe strosboscopique 7 pour chacune des pales 1a, 1.

Ainsi, l'opérateur en agissant simplement sur ces potentiomètres peut séparer les bandes réfléchissantes 10, 13 les unes des autres selon un écart réglable de façon à lui permettre de les distinguer aisément les unes par rapport aux autres.

Ces bandes réfléchissantes 10, 13 peuvent avoir des formes simples, comme représenté sur les figures 3 à 7.

Dans l'exemple représenté, la bande réfléchissante 10 fixée sur la cible 10 de la pale 1a, choisie comme référence, est un rectangle allongé verticalement de longueur L comprise entre une et deux fois la tolérance maximale d'écart de sillage et de largeur $\underline{l}$ égale à 2/10ème de cette longueur L.

Les bandes réfléchissantes 13 fixées sur les cibles 12 des autres pales 1 sont toutes identiques et présentent la forme de rectangles allongés horizontalement, leur largeur d étant avantageusement comprise entre 1/10ème et 2/10ème de la longueur L précitée.

On va maintenant décrire en référence à la figure 8 un exemple de circuit électronique du boîtier 6 de décalage des cibles permettant de décaler dans le temps l'émission du rayonnement lumineux de la lampe strosboscopique 7 pour écarter les bandes réfléchissantes 13 des différentes pales 1 par rapport à la bande réfléchissante 10 de la pale de référence 1a.

Ce circuit comprend une entrée 14 recevant les signaux électriques issus du capteur magnétique 3. Cette entrée 14 est reliée à un monostable 15 dont la constante de temps est réglée à 500 microsecondes environ. Ce monostable 15 est relié à l'une des entrées 16 d'une porte NAND 17 reliée à l'entrée 18 "remise à zéro" d'un registre à décalage 19. Ce monostable 15 est relié à un second monostable 20 dont la constante de temps est réglée à 2,3 millisecondes. Ce second monostable 20 est relié à l'autre entrée 21 de la porte NAND 17 et à la base d'un transistor 22. Un troisième monostable 23 dont la constante de temps est réglée à 60-80 millisecondes est relié à la sortie 24 de la porte NAND 17 et à l'entrée 25 du registre à décalage 19. Le transistor 22 est relié à une capacité 26 qui est elle-même reliée à l'entrée 27 d'une bascule 28 (de Schmitt) dont la constante de temps est réglée à 150 microsecondes.

La capacité 26 est d'autre part reliée à une série de potentiomètres réglables 29, 30, 31 et 32 correspondant à chacune des pales 1, 1a de l'hélicoptère et qui sont eux-mêmes reliés aux sorties S1, S2, S3 du registre de décalage 19 par l'intermédiaire de diodes 33, 34, 35 et 36. Le potentiomètre 32 affecté à la pale de référence 1a est en outre relié au registre à décalage 19 par un monostable 37, 38, 39 dont la constante de temps est réglée à 23 millisecondes environ.

Le fonctionnement du circuit électronique que l'on vient de décrire est le suivant:

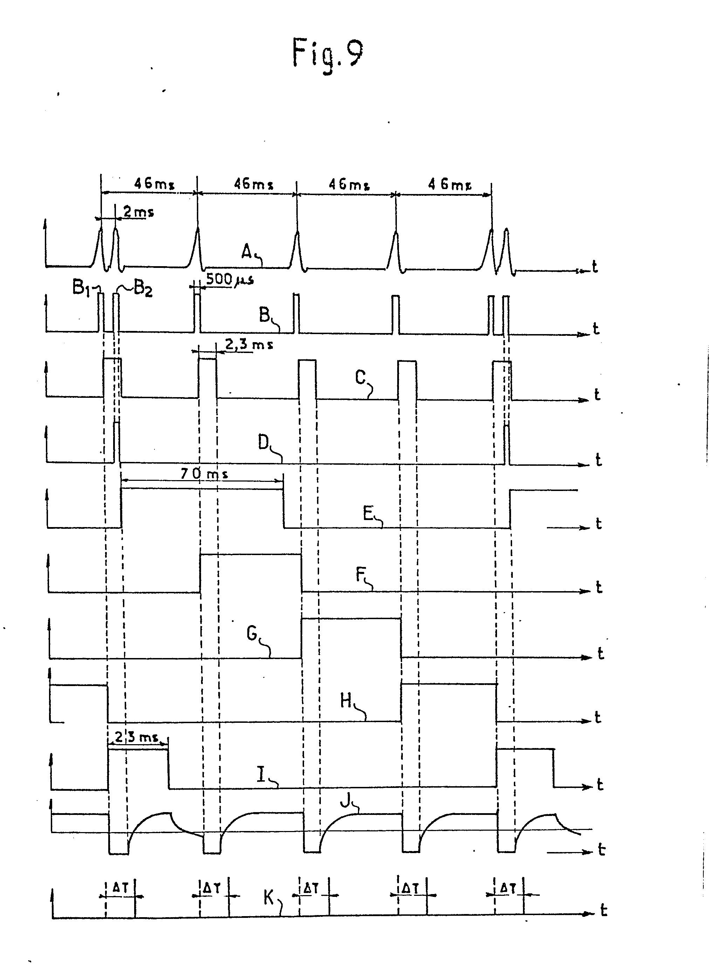

Le signal A (courbe A de la figure 9) provenant du capteur magnétique 3 est appliqué à l'entrée du monostable 15 qui transforme le signal A en créneau B (courbe B de la figure 9) d'amplitude égale par exemple à 5 volts et de largeur correspondant à la constante de temps du monostable 15, c'est-à-dire 500 microsecondes.

Le créneau B est ensuite appliqué sur l'entrée du monostable 20 et sur l'entrée 16 de la porte NAND 17.

Le monostable 20 délivre un signal C (voir courbe C) de largeur égale à 2,3 millisecondes. Ce signal C est appliqué à l'entrée 21 de la porte NAND 17 et sur la base du transistor 22.

A la coïncidence du créneau double $B_1, B_2$ correspondant à la pale de référence 1a et du créneau C, la sortie de la porte NAND 17 passe à l'état zéro. Le créneau D (courbe D de la figure 9) ainsi obtenu est appliqué sur l'entrée 18 (remise à zéro) du registre à décalage 19 et sur l'entrée du monostable 23.

Le temps de passage entre deux pales 1a, 1 est compris entre 40 et 60 millisecondes.

Il est nécessaire que le top horloge (créneau B) produit par la pale 1 qui suit la pale de référence 1a, se produise alors que l'entrée 25 du registre à décalage 19 est au niveau 1, afin de pouvoir décaler un créneau positif provenant du monostable 23, dans le registre à décalage 19. Il est également nécessaire, qu'au moment du top-horloge de la deuxième pale 1 suivant la pale de référence 1a, l'entrée précitée soit à zéro, sinon les deux sorties seraient à l'état zéro. A cet effet, il est nécessaire de prépositionner l'entrée 25 du registre 19 à partir du front descendant du créneau C pendant un certain temps pour qu'il soit plus petit que le temps de passage de trois pales espacées du temps du temps le plus court, et plus grand que le temps de passage de deux pales espacées du temps le plus long.

De ce fait, la constante de temps du monostable 23 doit être comprise entre 60 millisecondes et deux fois 40 millisecondes, soit 70 millisecondes environ (le temps de passage entre deux pales étant compris entre 40 et 60 millisecondes).

Le créneau E (voir courbe E) de 70 millisecondes est élaboré par le monostable 23 à partir du front descendant de l'impulsion remise à zéro issue de la porte NAND 17 . Ce créneau E est appliqué ensuite sur l'entrée 25 du registre à décalage 19 en attente du passage de la pale 1 qui suit la pale de référence 1a. L'impulsion horloge de la pale n° 2 arrive à la sortie S1 à l'état 0.

La capacité 26 se charge alors à travers la diode 33 et le potentiomètre 29. La tension de charge de la capacité 26 est appliquée à l'entrée 27 de la bascule 8. Quand le potentiel de charge de la capacité 26 atteint le seuil de la bascule 28, ce dernier délivre une impulsion positive de durée égale à 150 microsecondes.

Le retard DT entre cette impulsion et l'impulsion horloge est fonction de la position du potentiomètre 29.

A l'impulsion horloge suivante correspondant à la troisième pale 1, la sortie S2 du registre 19 passe à l'état 0, la sortie S1 repasse à l'état zéro

13

et la capacité 26 se décharge. A la fin de la durée de décharge de cette capacité 26, cette dernière se recharge à travers la diode 34 et le potentiomètre 30.

Il en est de même pour l'impulsion horloge de la pale n° 4. Au passage suivant de la pale de référence 1a, le premier créneau $B_1$ du double pulse fait repasser la sortie du registre 19 à l'état zéro, ce qui fait basculer le monostable constitué par 37, 38 (constante de temps égale à 23 millisecondes) et l'inverseur 39.

La capacité 26 se charge à travers la diode 36 et le potentiomètre 32 sans être influencée par l'arrivée du second créneau $B_2$ du signal double engendré par la pale de référence, en entraînant la remise à zéro du registre 19.

Le monostable 37, 38, 39 provoque donc un créneau qui permet de faire varier le retard de l'impulsion correspondant à la pale de référence, ce créneau étant bien synchrone avec le double pulse $B_1$, $B_2$.

Les courbes A à K représentées sur la figure 9 représentent les signaux émis dans les différents points du circuit électronique désignés pardes lettres correspondantes sur la figure 8.

Grâce au dispositif conforme à l'invention, le réglage du sillage des pales d'hélicoptère peut être effectué de la façon suivante.

En réglant les potentiomètres 29, 30, 31, 32 associés aux différentes pales 1a, 1, on écarte les bandes horizontales 13 appartenant aux pales 1, de la bande verticale 10 appartenant à la pale de référence 1a. Ceci permet de bien distinguer cette bande verticale 10 des autres bandes horizontales 13.

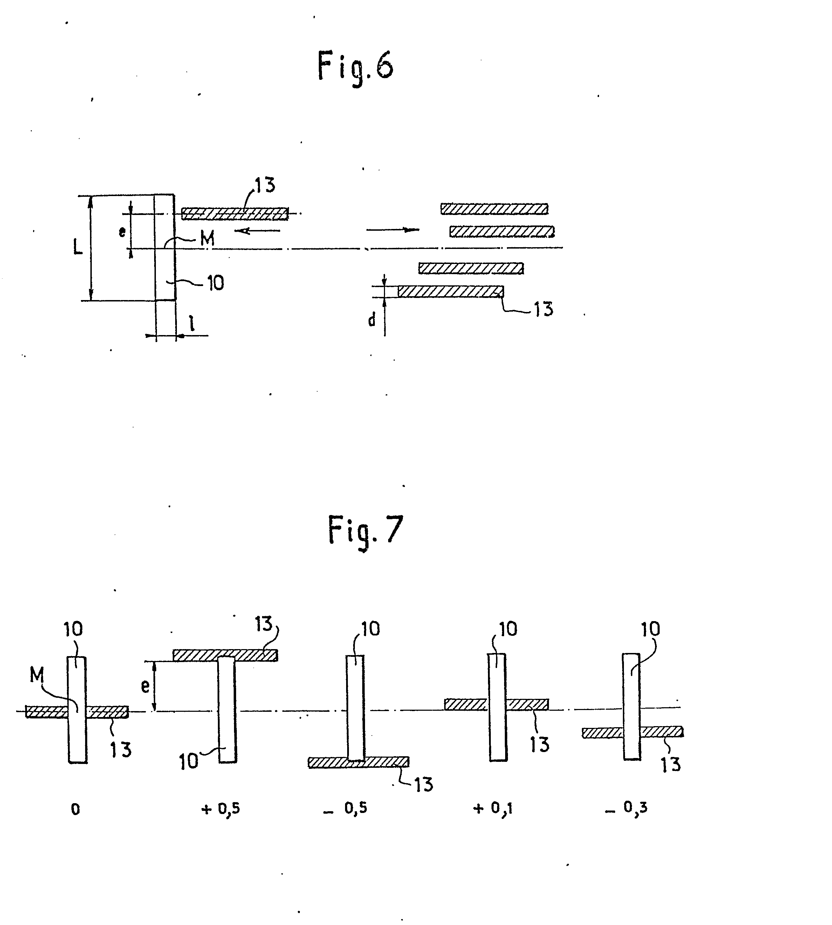

Ensuite, en agissant sur l'un des potentiomètres, on ramène l'une des bandes horizontales 13 (voir figure 6) vers la bande verticale 10 de référence jusqu'à ce que ces deux bandes soient superposées. Dans cette position, il est facile de mesurer visuellement l'écart e existant entre la position de cette bande horizontale 13 et le milieu M de la bande verticale 10.

Cette mesure étant effectuée, on écarte à nouveau la bande horizontale 13 et on procède de la même façon pour les autres bandes 13 écartées, en attente de mesure.

Sur la figure 7, on a représenté à titre d'exemple les positions relatives des différentes bandes horizontales 13 appartenant aux pales 1 par rapport à la bande verticale 10 de la pale de référence 1a. D'après ces positions relatives, on voit que pour la première pale l'écart de sillage e par rapport à la pale de référence 1a est nul, mais que pour les autres pales, ces écarts sont successivement égaux à +0,5 L -0,5 L -0,1 L et 0,3 L, L étant, comme indiqué précédemment la longueur de la bande réfléchissante 10 de la pale de référence 1a. Ces valeurs sont appréciées à ± 0,1 L près.

A partir de ces écarts mesurés, le réglage du sillage des différentes pales est réalisé de façon classique en agissant sur les longueurs respectives des biellettes de changement de pas des pales.

La précision de réglage obtenue par le dispositif conforme à l'invention, permet de diminuer considérablement le niveau des vibrations engendrées lors de la rotation des pales, ce qui est favorable à tenue mécanique des structures de l'appareil, à la fiabilité des équipements de bord et au confort des équipages. En outre, les mesures peuvent être effectuées aussi bien lors du vol qu'au sol.

Bien entendu, l'invention n'est pas limitée

15

à l'exemple que l'on vient de décrire et l'on peut apporter à celui-ci de nombreuses modifications, sans sortir du cadre de l'invention.

Ainsi le boîtier de décalage 6 peut comporter un commutateur qui permet de rendre ce boîtier transparent aux signaux issus du capteur magnétique 3, donc de n'apporter aucun décalage aux cibles respectives des pales. Cette disposition permet notamment de contrôler le bon fonctionnement des amortisseurs de traînée des pales.

Par ailleurs, les différentes constantes de temps des composants du circuit électronique contenu dans le boîtier de décalage 6 peuvent être modifiées suivant le type d'hélicoptère considéré.

D'autre part, on peut concevoir d'autres composants électroniques réglables que des potentiomètres pour décaler dans le temps les signaux émis par le capteur magnétique 3.

En outre, le capteur magnétique 3 peut être remplacé par tout autre capteur capable d'émettre un signal en synchronisme avec la rotation des pales.

REVENDICATIONS

1. Dispositif pour mesurer et régler les écarts de sillage des pales d'hélicoptère, comprenant une lampe strosboscopique (7) destinée à être dirigée vers une cible réfléchissante (10, 13) placée à l'extrémité (1b) d'une pale (1, 1a), des moyens (3) pour commander l'émission d'un rayonnement lumineux (9) de la lampe strosboscopique (7) à chaque passage d'une cible réfléchissante (10, 13) d'une pale dans la ligne de visée de cette lampe (7), vers la cible pour permettre une visualisation de la position des différentes cibles, le dispositif étant caractérisé·en ce qu'il comprend des moyens (6) pour décaler dans le temps d'une manière réglable l'émission des rayonnements lumineux (9) correspondant aux différentes pales (1, 1a) pour éviter la superposition des cibles (10, 13) visualisées dans la ligne de visée de la lampe strosboscopique (7), et en ce que la pale (1a) choisie comme référence porte une cible réfléchissante (10) différente des cibles réfléchissantes (13) portées par les autres pales (1).

2. Dispositif conforme à la revendication 1, caractérisé en ce que lesdits moyens (6) comprennent des moyens pour décaler identiquement l'émission des rayonnements lumineux correspondant aux pales (1) par rapport à l'émission du rayonnement lumineux correspondant à la pale de référence (1a).

3. Dispositif conforme à la revendication 1 ou 2 caractérisé en ce que la cible réfléchissante (10) de la pale (1a) choisie comme référence, est une bande verticale et en ce que les cibles (13) des autres pales (1) sont des bandes horizontales identiques entre elles.

4. Dispositif conforme à la revendication , caractérisé en ce que la bande verticale réfléchissante (10) de la pale de référence (1a) présente une longueur L comprise entre une et deux fois la tolérance maximale d'écart de sillage.

5. Dispositif conforme à l'une quelconque des revendications 3 ou 4, caractérisé en ce que la bande horizontale (13) des autres pales (1) présente une largeur (d) comprise entre 1/10ème et 2/10ème de la longueur de la bande réfléchissante (10).

6. Dispositif conforme à l'une quelconque des revendications 1 à 6, caractérisé en ce que lesdits moyens (6) comprennent en outre, des moyens pour supprimer successivement le décalage de l'émission des rayonnements lumineux correspondant aux différentes cibles (13) par rapport à l'émission du rayonnement lumineux correspondant à la pale de référence (1a), afin de superposer successivement les différentes cibles (13) avec la cible (10) de la pale de référence (1a).

7. Dispositif conforme à l'une quelconque des revendications 1 à 6, les moyens (3) pour commander l'émission d'un rayonnement lumineux (9) de la lampe strosboscopique (7) comprenant un capteur magnétique (3) disposé en regard d'un disque (4) rendu solidaire en rotation du rotor portant les pales (1, 1a), ce disque portant des couteaux (5, 5a) magnétiques écartés angulairement les uns des autres conformément à l'écart angulaire des pales (1, 1a), de façon que le capteur magnétique (3) délivre un signal électrique à chaque passage d'un couteau (5, 5a) devant le capteur, caractérisé en ce qu'entre ce capteur magnétique (3) et la lampe strosboscopique (7) est intercalé un boîtier de décalage (6) renfermant un circuit électronique comprenant des potentiomètres réglables (29; 30, 31, 32) associés à chaque pale (1, 1a),

ces potentiomètres permettant de régler le décalage entre les signaux issus du capteur magnétique (3) et l'émission du rayonnement lumineux (9) de la lampe stroboscopique (7).

8. Dispositif conforme à la revendication 7, caractérisé en ce qu'il comprend:

- un monostable (15) dont la constante de temps est réglée à 500 microsecondes environ et relié au capteur magnétique et à l'une des entrées (16) d'une porte (17) reliée à l'entrée (18) remise à zéro d'un registre à décalage (19),

- un second monostable (20) dont la constante de temps est réglée à 2,3 millisecondes environ, relié au premier monostable (15), à l'autre entrée (21) de la porte (17) et à la base d'un transistor (22),

- un troisième monostable (23) dont la constante de temps est réglée à 60-80 millisecondes, relié à la sortie (24) de la porte (17) et à l'entrée (25) du registre à décalage (19),

- une capacité (26) reliée à l'entrée (27) d'une bascule (28) dont la constante de temps est réglée à 150 microsecondes environ, cette bascule étant reliée au transistor (22),

- une série de potentiomètres réglables (29, 30, 31, 32) correspondant à chacune des pales (1, 1a) et reliés à la capacité (26), ces potentiomètres étant chacun reliés au registre à décalage (19) par l'intermédiaire d'une diode (33, 34, 35, 36), le potentiomètre (32) affecté à la pale de référence (1a) étant en outre relié au registre à décalage (19) par un monostable (37, 38, 39) dont la constante de temps est réglée à 23 millisecondes environ.

9. Procédé pour mesurer et régler les écarts de sillage des pales d'hélicoptère, dans lequel on

19

utilise un dispositif conforme à l'une quelconque des revendications 1 à 8, caractérisé par les étapes suivantes:

a) on décale dans le temps l'émission du rayonnement (9) issu de la lampe strosboscopique (7) correspondant aux différentes pales (1) à l'exception de la pale de référence (1a), en vue d'écarter la position des cibles réfléchissantes (13) des premières pales (1) par rapport à celle de la pale de référence (1a),

b) on annule le décalage précité pour l'une des pales (1) pour amener la cible correspondante (13) en superposition avec la cible (10) de la pale de référence (1a),

c) on mesure visuellement l'écart de sillage (e) d'après les positions respectives des deux cibles (10, 13),

d) on écarte à nouveau la cible (13) de la pale (1) précitée, par rapport à la cible de la pale de référence (1a),

e) et on répète ensuite successivement les étapes (b), (c) et (d) pour les cibles (13) des autres pales (1).

Fig.1

Fig.4

Fig.3

Fig.5

Fig.2

Fig.6

Fig.7

0        + 0,5        − 0,5        + 0,1        − 0,3

Fig. 8

# Fig.9

**0069815**

Numéro de la demande

EP 81 40 1106

Office européen
des brevets

**RAPPORT DE RECHERCHE EUROPEENNE**

## DOCUMENTS CONSIDERES COMME PERTINENTS

| Catégorie | Citation du document avec indication, en cas de besoin, des parties pertinentes | Revendication concernée |
|---|---|---|
| X | US - A - 3 856 410 (G. SWIFT et al.)<br><br>* figures 1,3,5,6,7,8; en entier * | 1 |
| | -- | |
| A | GB - A - 963 595 (ROLLS-ROYCE LTD)<br><br>* figure 2; en entier * | 7 |
| | -- | |
| A | US - A - 3 746 890 (G.E. WALKER)<br><br>* figures 1,5; en entier * | 7,8 |
| | -- | |
| A | US - A - 3 973 168 (W.A. KEARSLY)<br><br>* figures 5,6; en entier * | 7,8 |
| | -- | |
| A | US - A - 3 489 013 (J.K. TAYLOR et al.)<br><br>* figures 1,2,3; en entier * | 7,8 |

-------

**CLASSEMENT DE LA DEMANDE (Int. Cl. ³)**

G 01 B 11/00
            11/16
H 05 B 41/34
B 64 C 27/00

**DOMAINES TECHNIQUES RECHERCHES (Int. Cl. ³)**

G 01 B 11/00
            41/00
B 64 C 27/00

**CATEGORIE DES DOCUMENTS CITES**

X: particulièrement pertinent à lui seul
Y: particulièrement pertinent en combinaison avec un autre document de la même catégorie
A: arrière-plan technologique·
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications |
|---|---|

| Lieu de la recherche | Date d'achèvement de la recherche | Examinateur |
|---|---|---|
| La Haye | 22.02.1982 | VISSER |

OEB Form 1503.1   06.78